(19)

Europäisches
Patentamt
European
Patent Office
Office européen
des brevets

(11) **EP 1 882 902 A1**

(12) **EUROPEAN PATENT APPLICATION**

(43) Date of publication:
**30.01.2008 Bulletin 2008/05**

(51) Int Cl.:
***G01C 21/36*** (2006.01)

(21) Application number: **06015714.6**

(22) Date of filing: **27.07.2006**

| | |
|---|---|
| (84) Designated Contracting States: **AT BE BG CH CY CZ DE DK EE ES FI FR GB GR HU IE IS IT LI LT LU LV MC NL PL PT RO SE SI SK TR** Designated Extension States: **AL BA HR MK YU** | (72) Inventor: **Matsuo, Hideharu 85716 Unterschleissheim (DE)** (74) Representative: **Kramer - Barske - Schmidtchen European Patent Attorneys Landsberger Strasse 300 80687 München (DE)** |
| (71) Applicant: **Aisin AW Co., Ltd. Fujii-cho Anjo-shi, Aichi 444-1192 (JP)** | |

(54) **Navigation apparatus and method for providing guidance to a vehicle user using a touch screen**

(57)     A navigation apparatus for providing guidance to a vehicle user comprises an inpudoutput unit comprising a touch screen and adapted for outputting guidance information to the vehicle user, and a control unit adapted for generating guidance information and to control the apparatus, wherein the control unit is further adapted to selectively control a scroll operation of the touch screen either based on a new combined control vector calculated from a measured vector of a movement of a finger on the touch screen and the previous control vector, or based on a new control vector calculated from the measured vector without consideration of the previous control vector, the selection depending on the measured vector and on a pressing force of the finger.

Fig.2

**EP 1 882 902 A1**

**Description**

The present invention relates to a navigation apparatus and method for providing guidance to a vehicle user using a touch screen.

The use of touch screens is widely known in display technology.

US 6,690,387 B2 discloses a touch screen control, wherein a scroll operation continues even after the finger has been taken off the screen and the scroll speed gradually decreases thereafter. A user can stop the scroll operation by touching the screen with the finger again.

JP 5-27744 A discloses a touch screen control, wherein the sliding track of a finger is detected as a vector and used for controlling the scroll operation. The scroll operation stops when the finger is taken off the screen.

JP 2006-90962 A discloses a navigation system comprising a touch screen with a scroll operation control similar to the scroll control operation of US 6,690,387 B2 mentioned above.

JP 2002-213989 A discloses a navigation system comprising a touch screen with a scroll operation control, which uses a pressing force detection in that either the scroll operation is stopped, when no touching of the screen is detected anymore, or the scroll rate is reduced with increasing touch pressure.

In the application of touch screens in vehicle navigation systems, in particular with respect to scroll operations, it is an important aspect of the application that the user's attention is not distracted and the user is able to concentrate on the traffic. Therefore, the scroll operation should be as user-friendly as possible, in particular in terms of requiring the shortest possible attention to the touch screen when performing scroll operation.

It is an object of the present invention to provide an improved navigation apparatus and method for providing guidance to a vehicle user using a touch screen.

This object is achieved by an apparatus according to claim 1 or 2 or 6 or 13 and a method according to claim 11, respectively.

Further developments of the invention are given in the dependent claims.

The scroll operation control uses the measurement of the vector of a movement of a finger on a touch screen and the measurement of a pressing force of the finger on the touch screen.

If the movement speed exceeds a certain threshold i.e. if the absolute value of the vector exceeds a threshold value, it is assumed that the user wishes to change the scroll direction of the scroll operation.

If the pressing force does not exceed a force threshold, it is assumed that the user wishes to initiate a slight change of the scroll operation, which is accomplished by calculating a new combined control vector calculated from the measured movement vector and the previous control vector of scrolling.

If, on the other hand, the pressing force exceeds the force threshold, it is assumed that the user wishes to have a strong (abrupt) change of the scroll direction, such that the new control vector for the scroll operation is calculated based on the measured movement vector only without consideration of the previous control vector.

The consideration depending on exceeding or not exceeding the pressing force could also be made to the opposite, i.e. slight change with strong force and vice versa, but the above described dependency, i.e., combining the vectors when the pressing force does not exceed the force threshold, is preferred.

It is also possible to always use a combined control vector independent of the pressing force of the finger, but it is advantageous to make the above selection.

The use of the measured movement vector and of the measured pressing force is also advantageous in controlling the stopping of a scroll operation. If the absolute value of the movement vector is below a certain threshold, preferably if it equals zero, it can be assumed that the user wants to stop the scroll operation. Depending on the pressing force, the scroll operation can be stopped immediately, if the pressing force exceeds a force threshold indicating the user's wish to have a strong change of the scroll operation or the scroll speed can be gradually decreased, if the pressing force does not exceed the force threshold.

Again, the selection depending on the pressing force threshold can be opposite, but the above described manner is preferred.

Further features and advantages follow from the detailed description of embodiments referring to the figures. The figures show:

Fig. 1    a navigation apparatus according to an embodiment of the present invention; and

Fig. 2    a flow chart of a method according to an embodiment of the present invention.

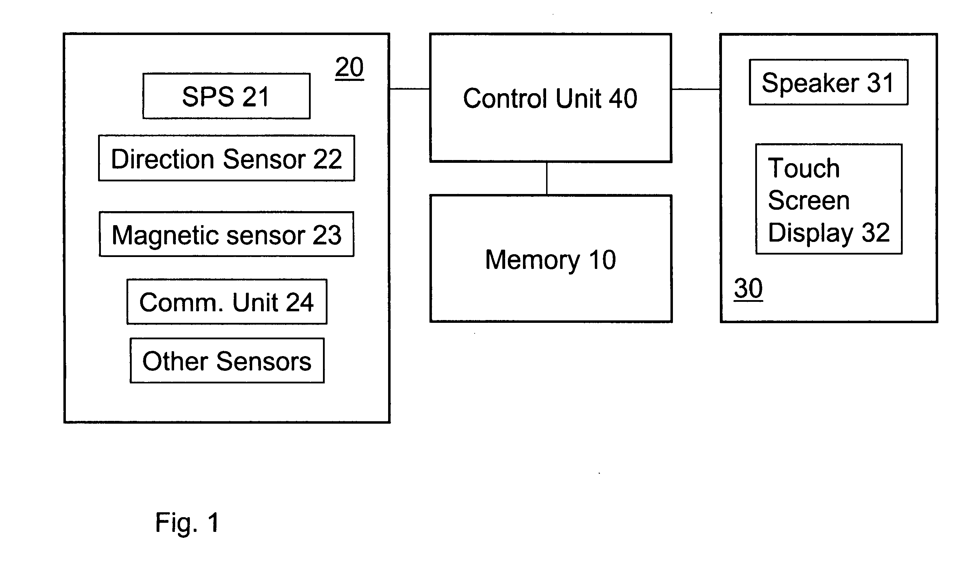

A navigation apparatus for providing guidance to a vehicle user according to an embodiment of the present invention is shown in Fig. 1 and comprises a memory 10 for storing map/road data, a sensor unit 20 comprising a satellite positioning system (SPS) receiver 21 (such as a GPS receiver), a direction sensor 22, a magnetic sensor 23, a communication unit 24 such as a cellular telephone unit and other sensors, an input/output unit 30 comprising a speaker 31 and a touch screen display 32, and a control unit 40 connected to the memory 10, the sensor unit 20 and the input/output unit 30 and adapted to control the navigation apparatus and to generate information to be output to the user. The navigation apparatus may comprise other usual units/devices such as turn buttons, jog dials, microphone, keyboard, drives and so on. For the sake of brevity, such additional functional elements are not shown and discussed here, as the present invention relates to the operation of the touch screen in a navigation apparatus.

The control unit 40 is adapted to control the scroll operation of the touch screen 32 based on the measured vector of a movement of a finger on the touch screen. Additionally, a pressing force of the finger of the touch screen is measured i.e. the touch screen display 32 is adapted to measure such a pressing force.

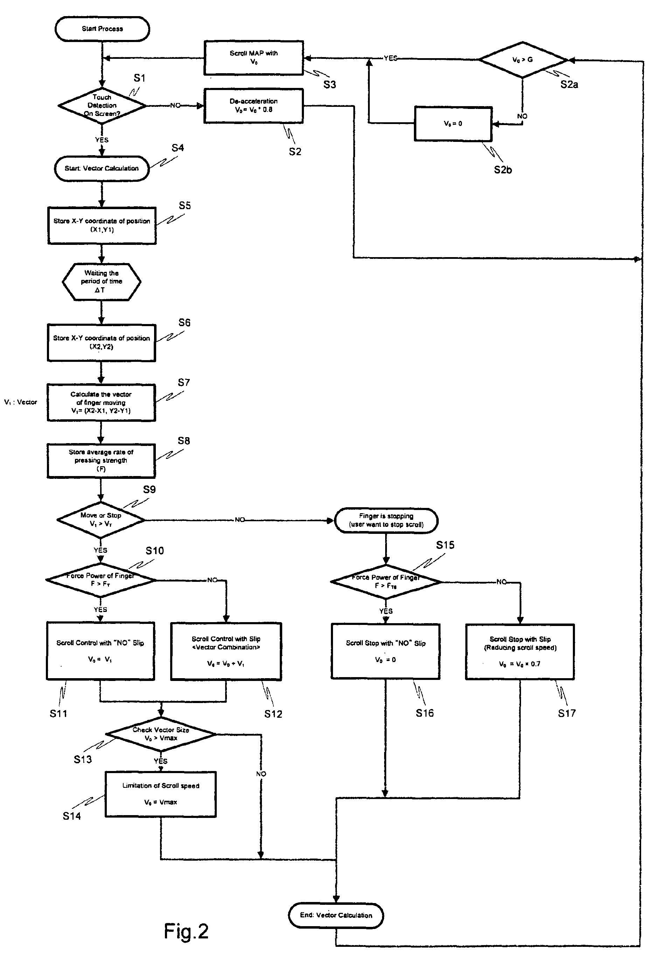

The control unit 40 is adapted to control the scroll operation of the touch screen according to a process, an embodiment of which is shown in the flow chart of Fig. 2.

After start of the process, it is determined in step S 1 whether a touching of the screen was detected. If no touch was detected (N in step S1), a new control vector $V_0$ for the scroll operation is calculated in step S2 in that the previous control vector $V_0$ is multiplied with a value <1, in the present example 0.8. It is obvious that, if the previous control vector $V_0$ = 0, the new control vector also equals 0.

After step S2, the process continues to step S2a, where it is determined whether the control vector $V_0$ exceeds a threshold G. The threshold G is set to a very low value such as 0.1mm/s. The threshold G serves to prevent an asymptotic calculation of the scroll vector $V_0$. If the scroll vector $V_0$ does not exceed the threshold G (N in step S2a), scroll vector $V_0$ is set to zero in step S2b to prevent such an asymptotic approach of the absolute value of $V_0$ to zero.

The process continues from steps S2a, S2b to step S3, where a scroll operation of the displayed map or of other display items such as street lists and so on is controlled using the new control vector $V_0$ calculated in steps S2, S11-S14, S16, S 17 and S2a, S2b.

If a touching of the touch screen was detected in step S1 (Y in step S1), a movement vector calculation for calculating a measured vector $V_1$ of a movement of a finger on the touch screen 32 is started in step S4. At first, in step S5, the X-Y coordinates of the touch position on the touch screen are stored (X1, Y1) in step S5. Then, after waiting a predetermined period of time $\Delta T$ (for example 100ms), the X-Y coordinates of the touch position on the touch screen are stored again (X2, Y2) in step S6.

It should be noted that the waiting time $\Delta T$ can be any reasonable value for measuring the movement of a finger on the touch screen, which also depends on the size of the touch screen. Accordingly, any value between 5ms and 1000ms could be set. Preferred values are in the range from 20ms to 300ms. For the sake of clarity, any intermediate value in the indicated range, i.e. 5ms, 6ms, 7ms, 8ms, ..., 33ms, 34, ms, 35ms, ..., 99ms, 100ms, 101ms, ..., 213ms, 214ms, ..., 998ms, 999ms, 1000ms can be selected for $\Delta T$ and also as an upper or lower range limit for $\Delta T$ values.

In step S7 a vector $V_1$ of the finger movement (=measured vector) is calculated according to the following formula

$$V_1 = (X2\text{-}X1,\ Y2\text{-}Y1) \quad ...(1).$$

In step S8, the pressing force F of the finger is stored. This pressing force F can be either the pressing force at position (X1, Y1) or at position (X2, Y2) or the average pressing force during the movement from position (X1, Y1) to position (X2, Y2) or another representative pressing force value. In the embodiment shown in Fig. 2, the average pressing force is stored.

After calculating the movement vector and storing the pressing force, it is determined in step S9, whether the absolute value of the movement vector $V_1$ exceeds a first threshold $V_T$. In the embodiment shown in Fig. 2, the first threshold $V_T$ = 0. However, $V_T$ could also be a low value such as 0.1 or 1 or 5mm/s or any intermediate value. The value of $V_T$=0 is preferred.

If the absolute value of the movement vector exceeds the first threshold $V_T$ (Y in step S9), it is determined in step S10, whether the pressing force F of the finger exceeds a second threshold $F_T$.

If the pressing force of the finger exceeds the second threshold $F_T$ (Y in step S10), it is assumed that the user wishes a strong change of the scroll operation and a new control vector $V_0$=$V_1$ is determined in step S11.

If, on the other hand, the pressing force does not exceed the second threshold $F_T$ (N in step S10), a new scroll control vector $V_0$=$V_0$+$V_1$ is calculated in step S12 and determined to be the new scroll control vector $V_0$.

In step S13, it is determined whether the absolute value of the new scroll control vector determined in step S11 or S12 exceeds a maximum value $V_{max}$ for the control vector. If not (N in step S13), the vector calculation is finished. Otherwise (Y in step S13) the absolute value of the new control vector $V_0$ is set to be the maximum value $V_{max}$ in step S14 (with the same direction) and then the vector calculation is finished.

After the end of the vector calculation, the process proceeds to step S3 (via step S2a, S2b), where the scroll operation of the map or other display items is performed with the new control vector $V_0$.

If the movement vector $V_1$ does not exceed the first threshold $V_T$ in step S9 (N in step S9), it is assumed that the user stopped his finger touching the touch screen, i.e. that the user wants to stop the scroll operation. In step S15, it is determined whether the pressing force exceeds a third threshold $F_{TS}$. If so (Y in step S15), the scroll operation is stopped immediately by setting the new control vector $V_0$ to zero in step S16.

Otherwise (N in step S15), the speed of the scroll operation is gradually decreased in step S17 (with preferably a stronger decrease rate than in step S2).

After step S16 or step S17, the process of calculating the control vector $V_0$ is finished and the process continues again to step S2a.

It is obvious to the skilled person, that the advantages of the calculation of a new combined control vector or of a new control vector without considering the previous control vector (steps S11, S12) are independent of the advantages of controlling the stop operation (steps S16, S17). Of course, both approaches use the measurement of the pressing force and of the movement vector, and, if combined, even enhance the effects.

It is also obvious, that the calculation of the new combined control vector from the measured movement vector and the previous control vector (step S12) can be used without the normal control vector calculation (step S11) and, consequently, without determining the pressure force. However, it is preferred to use the selection of the calculation methods in steps S11 and S12 based on the pressing force in step S10.

The teachings could also be applied to other touch screen display applications than navigations systems.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A navigation apparatus for providing guidance to a vehicle user, comprising
   an input/output unit (30) comprising a touch screen (32) and adapted for outputting guidance information to the vehicle user, and
   a control unit (40) adapted for generating guidance information and to control the apparatus, wherein the control unit (40) is further adapted to selectively control a scroll operation of the touch screen (32) either

   - based on a new combined control vector ($V_0$) calculated from a measured vector ($V_1$) of a movement of a finger on the touch screen (32) and the previous control vector ($V_0$), or
   - based on a new control vector ($V_0$) calculated from the measured vector ($V_1$) without consideration of the previous control vector ($V_0$),

   the selection depending on the measured vector ($V_1$) and on a pressing force (F) of the finger.

2. A navigation apparatus for providing guidance to a vehicle user, comprising
   an input/output unit (30) comprising a touch screen (32) and adapted for outputting guidance information to the vehicle user, and
   a control unit (40) adapted for generating guidance information and to control the apparatus, wherein the control unit (40) is further adapted to selectively control

   - a scroll operation of the touch screen (32) either based on a new combined control vector ($V_0$) calculated from a measured vector ($V_1$) of a movement of a finger on the touch screen (32) and the previous control vector ($V_0$), or based on a new control vector ($V_0$) calculated from the measured vector ($V_1$) without consideration of the previous control vector ($V_0$),

   the selection depending on the measured vector ($V_1$) and on a pressing force (F) of the finger, and/or

   - a stopping of a scroll operation of the touch screen (32) to either stop immediately or to stop gradually based on a measured vector ($V_1$) of a movement of a finger on the touch screen (32) and on a pressing force (F) of the finger on the touch screen (32).

3. The apparatus of claim 1 or 2, wherein
   the control unit (40) is adapted to select to control a scroll operation of the touch screen (32) based on a new combined control vector ($V_0$) calculated from the measured vector ($V_1$) of a movement of a finger on the touch screen (32) and the previous control vector ($V_0$), if the absolute value of the measured vector ($V_1$) exceeds a first threshold ($V_T$) and if the pressing force (F) of the finger does not exceed a second threshold ($F_T$).

4. The apparatus of one of claims 1 to 3, wherein
   the control unit (40) is adapted to select to control a scroll operation of the touch screen (32) based on a new control vector ($V_0$) calculated from the measured vector ($V_1$) without consideration of the previous control vector ($V_0$), if the absolute value of the measured vector ($V_1$) exceeds a first threshold ($V_T$) and if the pressing force (F) of the finger exceeds a second threshold ($F_T$).

5. The apparatus of claims 3 or 4, wherein
   the first threshold ($V_T$) is 0.

6. A navigation apparatus for providing guidance to a vehicle user, comprising
   an input/output unit (30) comprising a touch screen (32) and adapted for outputting guidance information to the vehicle user, and

a control unit (40) adapted for generating guidance information and to control the apparatus, wherein the control unit (40) is further adapted to selectively control a stopping of a scroll operation of the touch screen (32) to either stop immediately or to stop gradually based on a measured vector ($V_1$) of a movement of a finger on the touch screen (32) and on a pressing force (F) of the finger on the touch screen (32).

7. The apparatus of one of claims 2 to 6, wherein the control unit (40) is adapted to select to control a stopping of a scroll operation of the touch screen (32), if a measured vector ($V_1$) of a movement of a finger on the touch screen (32) does not exceed a third threshold ($V_T$).

8. The apparatus of one of claims 2 to 6, wherein the control unit (40) is adapted to select to control a stopping of a scroll operation of the touch screen (32)

    - to stop immediately, if the pressing force (F) of the finger exceeds a fourth threshold ($F_{TS}$), and
    - to stop gradually, if the pressing force (F) of the finger does not exceed the fourth threshold ($F_{TS}$).

9. The apparatus of claim 7 or 8, wherein the fourth threshold ($F_{TS}$) is equal to the second threshold ($F_T$) and/or the third threshold ($V_T$) is equal to the first threshold ($V_T$).

10. The apparatus of one of claims 1 to 9, further comprising a memory (10) adapted for storing map/road data, and a sensor unit (20) adapted for providing position information on a position of a vehicle, the control unit (40) adapted for processing the position information and the map/road data to to generate the guidance information.

11. A navigation method for providing guidance to a vehicle user using a touch screen, comprising generating guidance information, outputting guidance information to the vehicle user, and selectively controlling

    a) a scroll operation of the touch screen (32) either

        - based on a new combined control vector ($V_0$) calculated from a measured vector ($V_1$) of a movement of a finger on the touch screen (32) and a previous control vector (V0), or

        - based on a new control vector ($V_0$) calculated from the measured vector ($V_1$) without consideration of the previous control vector ($V_0$),

    the selection depending on the measured vector ($V_1$) and on a pressing force (F) of the finger, and/or
    b) a stopping of a scroll operation of the touch screen (32) to either stop immediately or to stop gradually based on a on a pressing force (F) of a finger on the touch screen (32).

12. A computer program comprising program code which, when run on a correspondingly programmed computer, implements the steps of a method according to claim 11.

13. A navigation apparatus for providing guidance to a vehicle user, comprising an input/output unit (30) comprising a touch screen (32) and adapted for outputting guidance information to the vehicle user, and a control unit (40) adapted for generating guidance information and to control the apparatus, wherein the control unit (40) is further adapted to selectively control a scroll operation of the touch screen (32) based on a new combined control vector ($V_0$) calculated from a measured vector ($V_1$) of a movement of a finger on the touch screen (32) and the previous control vector ($V_0$).

Fig. 1

EP 1 882 902 A1

Fig.2

**European Patent Office**

## EUROPEAN SEARCH REPORT

Application Number

EP 06 01 5714

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/008191 A1 (POUPYREV IVAN [JP] ET AL) 15 January 2004 (2004-01-15) <br> * page 11, paragraph 222-230 - page 10, paragraph 176 * <br> * page 9, paragraph 159 - page 8, paragraph 136 * <br> * page 7, paragraphs 127,129 - page 3, paragraph 44-52 * | 1-13 | INV. <br> G01C21/36 |
| X <br><br> A | EP 0 762 264 B1 (SHARP KK [JP]) 20 February 2002 (2002-02-20) <br> * abstract * <br> * column 1, lines 34-37 - column 4, lines 35-45 * <br> * column 9, lines 39-59 - column 10, lines 1-14 * <br> * columns 25,28,29 * | 1,2,6, 10-13 <br> 3-5,7-9 | |
| A | JP 11 304503 A (MATSUSHITA ELECTRIC IND CO LTD) 5 November 1999 (1999-11-05) <br> * abstract * | 1-13 | TECHNICAL FIELDS SEARCHED (IPC) |
| A | US 2004/150630 A1 (HINCKLEY KENNETH P [US] ET AL) 5 August 2004 (2004-08-05) <br> * page 6, paragraphs 56,57 - page 7, paragraph 64 * | 1-13 | G01C <br> G06F |
| A | US 2004/233179 A1 (LIRA LUIGI [US]) 25 November 2004 (2004-11-25) <br> * page 1, paragraph 8 - page 4, paragraph 50-54; claim 7 * | 1-13 | |
| A | US 6 888 536 B2 (WESTERMAN WAYNE [US] ET AL) 3 May 2005 (2005-05-03) <br> * the whole document * | 1-13 | |

The present search report has been drawn up for all claims

| Place of search | Date of completion of the search | Examiner |
|---|---|---|
| The Hague | 21 March 2007 | Dragomir, Adrian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 01 5714

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2007

| Patent document cited in search report | | | Publication date | Patent family member(s) | | | Publication date |
|---|---|---|---|---|---|---|---|
| US 2004008191 | A1 | | 15-01-2004 | NONE | | | |
| EP 0762264 | B1 | | 20-02-2002 | CN | 1151556 | A | 11-06-1997 |
| | | | | DE | 69619320 | D1 | 28-03-2002 |
| | | | | DE | 69619320 | T2 | 31-10-2002 |
| | | | | EP | 0762264 | A1 | 12-03-1997 |
| | | | | JP | 9069037 | A | 11-03-1997 |
| | | | | US | 5867158 | A | 02-02-1999 |
| JP 11304503 | A | | 05-11-1999 | NONE | | | |
| US 2004150630 | A1 | | 05-08-2004 | NONE | | | |
| US 2004233179 | A1 | | 25-11-2004 | NONE | | | |
| US 6888536 | B2 | | 03-05-2005 | AU | 759440 | B2 | 17-04-2003 |
| | | | | AU | 2467399 | A | 09-08-1999 |
| | | | | CA | 2318815 | A1 | 29-07-1999 |
| | | | | EP | 1058924 | A1 | 13-12-2000 |
| | | | | IL | 137478 | A | 20-11-2005 |
| | | | | JP | 2002501271 | T | 15-01-2002 |
| | | | | KR | 20060053010 | A | 19-05-2006 |
| | | | | KR | 20060058784 | A | 30-05-2006 |
| | | | | KR | 20060059263 | A | 01-06-2006 |
| | | | | KR | 20060053011 | A | 19-05-2006 |
| | | | | KR | 20060059264 | A | 01-06-2006 |
| | | | | KR | 20060059265 | A | 01-06-2006 |
| | | | | KR | 20060053012 | A | 19-05-2006 |
| | | | | KR | 20060058731 | A | 30-05-2006 |
| | | | | KR | 20060058732 | A | 30-05-2006 |
| | | | | WO | 9938149 | A1 | 29-07-1999 |
| | | | | US | 6323846 | B1 | 27-11-2001 |
| | | | | US | 2002015024 | A1 | 07-02-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6690387 B2
- JP 5027744 A
- JP 2006090962 A
- JP 2002213989 A